(19) Europäisches Patentamt / European Patent Office / Office européen des brevets

(11) **EP 4 510 747 A1**

(12) **EUROPEAN PATENT APPLICATION**
published in accordance with Art. 153(4) EPC

(43) Date of publication:
**19.02.2025  Bulletin 2025/08**

(21) Application number: 23788579.3

(22) Date of filing: **12.04.2023**

(51) International Patent Classification (IPC):
*H04W 72/27* (2023.01)      *H04W 72/23* (2023.01)
*H04W 72/04* (2023.01)      *H04L 27/26* (2006.01)
*H04W 84/04* (2009.01)      *H04B 7/155* (2006.01)
*H04W 72/20* (2023.01)

(52) Cooperative Patent Classification (CPC):
H04B 7/155; H04L 27/26; H04W 72/04;
H04W 72/20; H04W 72/23; H04W 72/27;
H04W 84/04

(86) International application number:
**PCT/KR2023/004896**

(87) International publication number:
**WO 2023/200230 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **13.04.2022  KR 20220045599
04.11.2022  KR 20220146470**

(71) Applicant: **LG Electronics Inc.**
**Yeongdeungpo-gu**
**Seoul 07336 (KR)**

(72) Inventors:
• **YOU, Hyangsun**
  **Seoul 06772 (KR)**
• **SHIM, Jaenam**
  **Seoul 06772 (KR)**
• **KO, Hyunsoo**
  **Seoul 06772 (KR)**
• **YANG, Suckchel**
  **Seoul 06772 (KR)**
• **KANG, Jiwon**
  **Seoul 06772 (KR)**

(74) Representative: **Plasseraud IP**
**104 Rue de Richelieu**
**CS92104**
**75080 Paris Cedex 02 (FR)**

(54) **METHOD FOR OPERATING DEVICE IN WIRELESS COMMUNICATION SYSTEM AND DEVICE USING SAME METHOD**

(57) Provided are a method and an apparatus for operating an NCR in a wireless communication system. The NCR includes NCR-MT and NCR-Fwd. The NCR receives a control message from a base station through the NCR-MT, and performs a forwarding operation through the NCR-Fwd on the basis of the control message. The control message indicates a beam applied to the forwarding operation of the NCR-Fwd and a forwarding resource in a time domain to which the beam is applied. The NCRFwd is in an OFF state in a time resource other than the forwarding resource. That is, if there is no explicit or implicit instruction from the base station, the NCR-Fwd is always expected to be in an OFF state.

**FIG. 16**

Receiving, from the base station via the NCR-MT, a control message indicating the beam applied to the forwarding operation of the access link of the NCR-Fwd and the forwarding resource in the time domain to which the beam is applied — S161

Performing a forwarding operation through the NCR-Fwd based on the control message, wherein the NCR-Fwd is in an OFF state in time resources other than the forwarding resource — S162

Processed by Luminess, 75001 PARIS (FR)

**Description**

**TECHNICAL FIELD**

This disclosure relates to a method of operating a device in a wireless communication system and a device using the method.

**BACKGROUND ART**

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/user equipment (UE) is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

Meanwhile, a repeater (also called a relay) can be introduced to NR. However, in the case of a conventional repeater, it always forwards the signal received from the base station to the UE, and the signal received from the UE to the base station, regardless of whether it actually transmits or receives a meaningful signal/channel.

This operation wastes the power of the NCR and can cause unnecessary interference to neighboring UEs and base stations. Taking this into account, it is necessary to consider the ON-OFF operation of the NCR.

**DISCLOSURE**

**TECHNICAL PROBLEM**

The technical problem that the present disclosure aims to solve is to provide a method of operating a device in a wireless communication system and a device that uses the method.

**TECHNICAL SOLUTION**

In a wireless communication system, a method of operating of a network-controlled repeater (NCR) comprising an NCR-mobile termination (MT) and an NCR-forwarding (Fwd) and an apparatus are provided. The NCR receives a control message from the base station via the NCR-MT informing a beam to which a forwarding operation of the NCR-Fwd applies and a forwarding resource in a time domain to which the beam applies, and performs the forwarding operation via the NCR-Fwd based on the control message. The NCR-Fwd operates in an ON state in the forwarding resource related to the beam, and in an OFF state in time resources other than the forwarding resource.

**ADVANTAGEOUS EFFECTS**

According to the present disclosure, if there is no separate instruction(indication) from the base station, the NCR-Fwd operates in the OFF state. By clarifying the operation of the NCR-Fwd in this way, ambiguity in understanding the operation between the base station and the NCR can be prevented.

Additionally, it can reduce unnecessary signaling to NCR and prevent unnecessary interference to neighboring devices.

**BRIEF DESCRIPTION OF THE DRAWINGS**

FIG. 1 illustrates the system structure of a next-generation radio access network (NG-RAN) to which NR is applied.
FIG. 2 is a block diagram showing the radio protocol architecture for the user plane.
FIG. 3 is a block diagram showing the radio protocol structure for the control plane.
FIG. 4 illustrates the functional division between NG-RAN and 5GC.
FIG. 5 illustrates a frame structure that can be applied in NR.
FIG. 6 illustrates the slot structure of an NR frame.
FIG. 7 illustrates the CORESET.

FIG. 8 shows an example of a frame structure for a new wireless access technology.

FIG. 9 illustrates the structure of a self-contained slot.

FIG. 10 illustrates physical channels and typical signal transmission.

FIG. 11 illustrates possible transport network architectures for 5G.

FIG. 12 shows an example of a topology in which the NCR performs transmissions and receptions between the base station and the UE.

FIG. 13 is a diagram comparing the operation of NCR and an existing RF repeater.

FIG. 14 shows an example of a link between a base station, NCR, and UE.

FIG. 15 illustrates the operation of NCR.

FIG. 16 illustrates the operation method of NCR.

FIG. 17 illustrates the operation method of the base station.

FIG. 18 illustrates a wireless device that can be applied the present specification.

FIG. 19 shows an example of a signal processing module structure.

FIG. 20 shows another example of the structure of a signal processing module in a transmission device.

FIG. 21 shows an example of a wireless communication device according to an implementation example of the present disclosure.

FIG. 22 shows another example of a wireless device.

FIG. 23 shows another example of a wireless device applied to the present specification.

FIG. 24 illustrates the communication system 1 applied to this specification.

## MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

A wireless communication system to which the present disclosure can be applied may be called, for example, E-UTRAN (Evolved-UMTS Terrestrial Radio Access Network), or LTE (Long Term Evolution)/LTE-A system.

The E-UTRAN includes a base station (BS) which provides a control plane and a user plane to a user equipment (UE). The UE may be fixed or mobile, and may be referred to as another terminology, such as a mobile station (MS), a user terminal (UT), a subscriber station (SS), a mobile terminal (MT), a wireless device, terminal etc. The BS is generally a fixed station that communicates with the UE and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC), more specifically, to a mobility management entity (MME) through S1-MME and to a serving gateway (S-GW) through S1-U.

The EPC includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

As more and more communication devices require greater communication capacity, there is a need for improved mobile broadband communications over traditional radio access technology (RAT). Massive MTC (massive Machine Type Communications), which connects multiple devices and objects to provide various services anytime, anywhere, is also one of the major issues to be considered in next-generation communications. In addition, the design of communication systems considering reliability and latency-sensitive services/UEs is being discussed. As such, the introduction of next-generation radio access technologies that take into account enhanced mobile broadband communication, massive MTC, ultra-reliable and low latency communication (URLLC), etc. is being discussed, and the technology is referred to herein as new radio access technology (new RAT, NR) for convenience.

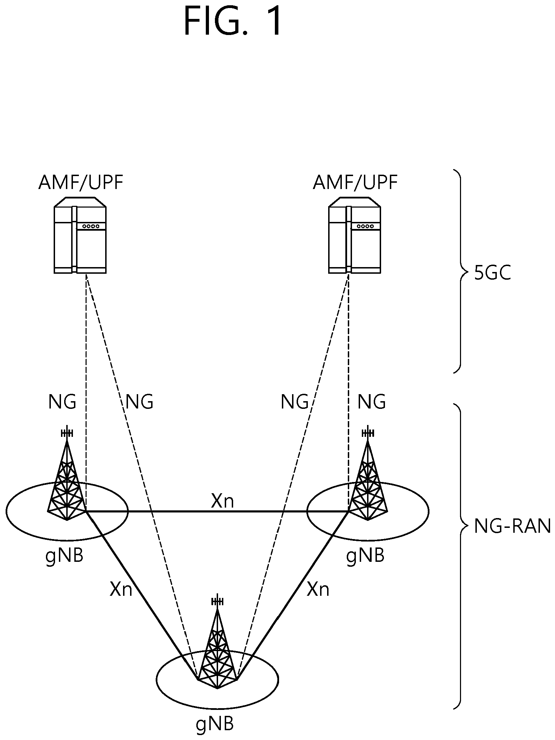

FIG. 1 illustrates a system structure of a next generation radio access network (NG-RAN) to which NR is applied.

Referring to FIG. 1, the NG-RAN may include a gNB and/or an eNB that provides user plane and control plane protocol termination to a UE. FIG. 1 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

Meanwhile, layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

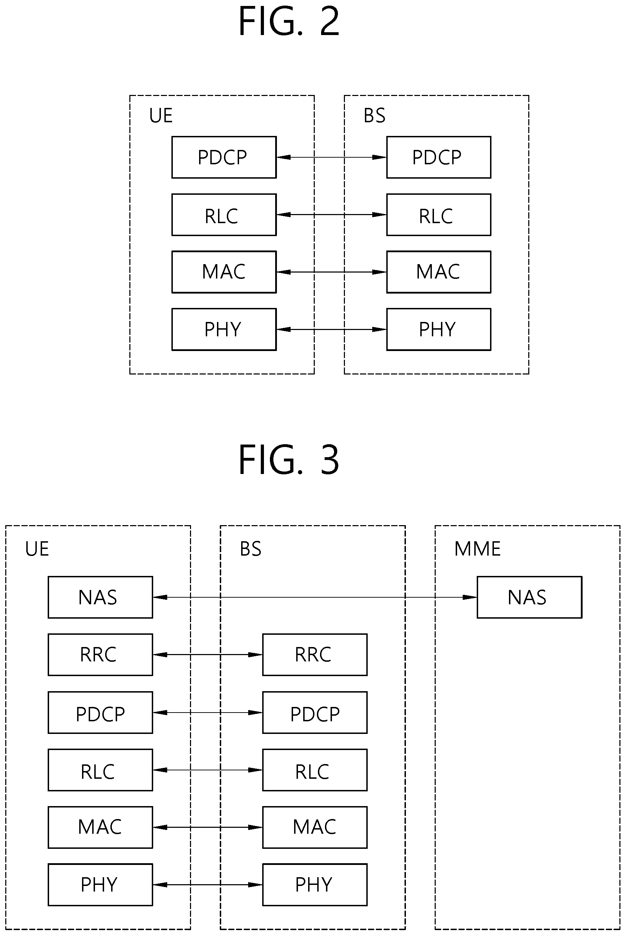

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is an upper layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

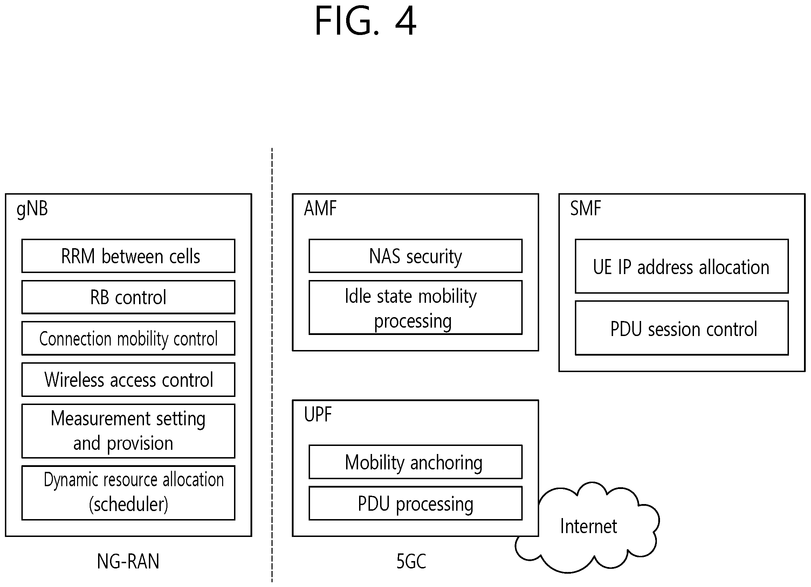

FIG. 4 illustrates a functional division between an NG-RAN and a 5GC.

Referring to FIG. 4, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

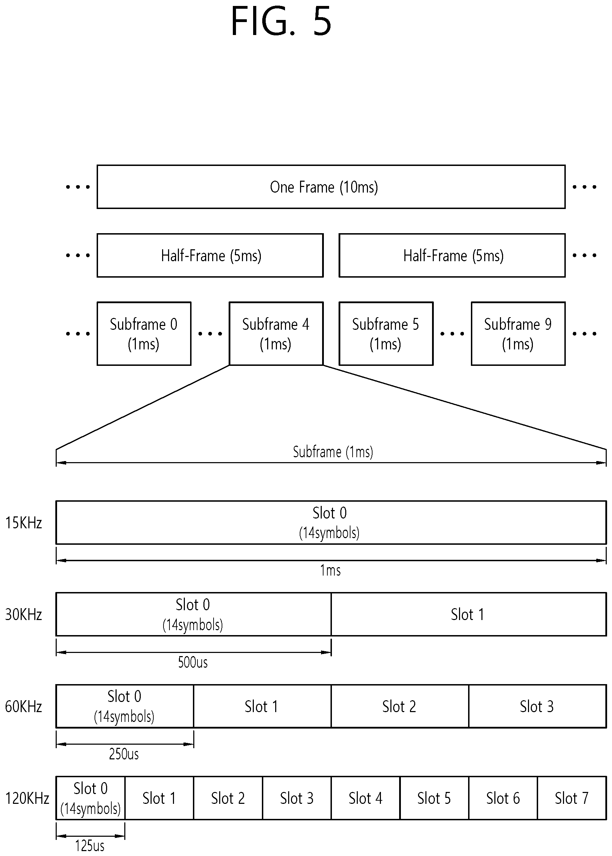

FIG. 5 illustrates an example of a frame structure that may be applied in NR.

Referring to FIG. 5, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration $\mu$.

[Table 1]

| $\mu$ | $\Delta f = 2^\mu \cdot 15$[kHz] | Cyclic prefix |
|---|---|---|
| 0 | 15 | Normal |
| 1 | 30 | Normal |
| 2 | 60 | Normal Extended |
| 3 | 120 | Normal |
| 4 | 240 | Normal |

The following table 2 illustrates the number of slots in a frame ($N^{frame,\mu}_{slot}$), the number of slots in a subframe ($N^{subframe,\mu}_{slot}$), the number of symbols in a slot ($N^{slot}_{symb}$), and the like, according to subcarrier spacing configurations $\mu$.

[Table 2]

| $\mu$ | $N^{slot}_{symb}$ | $N^{frame,\mu}_{slot}$ | $N^{subframe,\mu}_{slot}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

FIG. 5 illustrates a case of $\mu$=0, 1, 2, 3.

Table 2-1 below illustrates that the number of symbols per slot, the number of slots per frame, and the number of slots per subframe vary depending on the SCS, in case of using an extended CP.

[Table 2-1]

| SCS ($15 \cdot 2^\mu$) | $N^{slot}_{symb}$ | $N^{frame,\mu}_{slot}$ | $N^{subframe,\mu}_{slot}$ |
|---|---|---|---|
| 60kHz ($\mu$ =2) | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

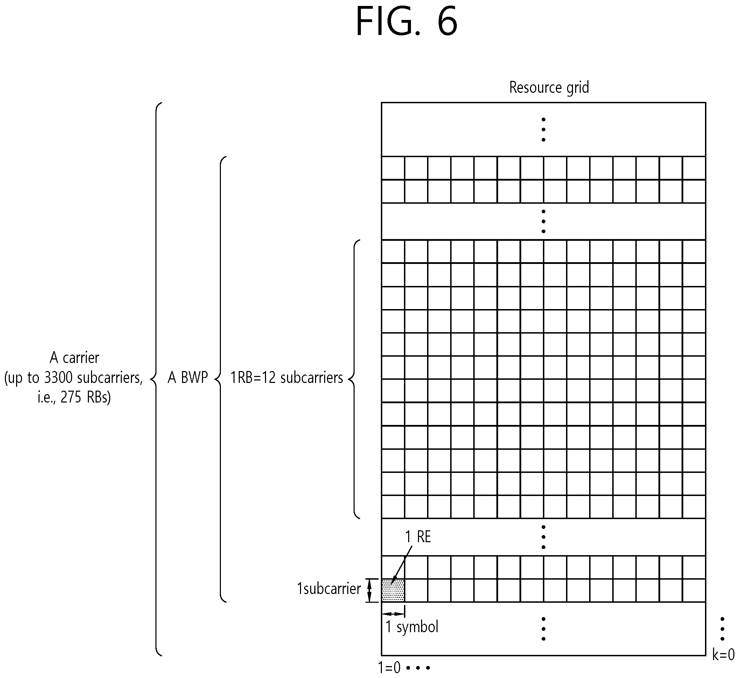

FIG. 6 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of contiguous (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

[Table 3]

| Aggregation level | Number of CCEs |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

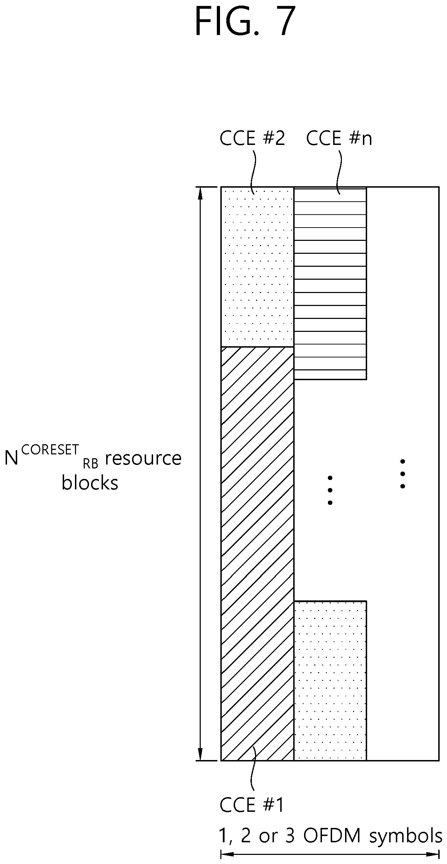

FIG. 7 illustrates CORESET.

Referring to FIG. 7, the CORESET includes $N^{CORESET}_{RB}$ number of resource blocks in the frequency domain, and $N^{CORESET}_{symb} \in \{1, 2, 3\}$ number of symbols in the time domain. $N^{CORESET}_{RB}$ and $N^{CORESET}_{symb}$ may be provided by a base station via higher layer signaling. As illustrated in FIG. 7, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system band used by a base station (BS). All the UEs, excluding some (e.g., eMTC/NB-IoT UE) supporting only a narrow band, shall be able to receive wireless signals of the entire system band of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system band.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

<Self-contained subframe structure>

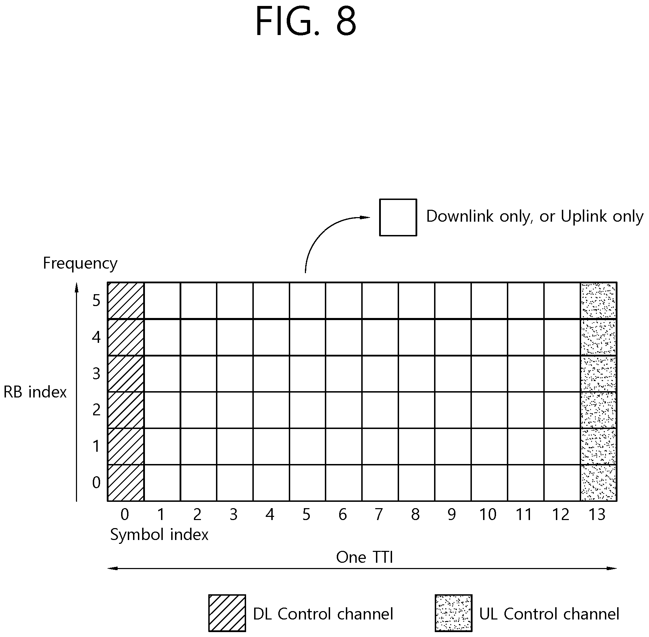

FIG. 8 shows an example of a frame structure for a new wireless access technology.

In NR, as shown in FIG. 8, a structure in which a control channel and a data channel are time-division-multiplexed within one TTI can be considered as a frame structure in order to minimize latency.

In FIG. 8, the hatched area represents the downlink control area, and the black portion represents the uplink control area. An unmarked area may be used for transmitting downlink data (DL data) or may be used for transmitting uplink data (UL data). The characteristic of this structure is that downlink (DL) transmission and uplink (UL) transmission proceed sequentially within one subframe, DL data can be transmitted within a subframe and UL ACK/NACK (Acknowledgement/Not-acknowledgement) can also be received. As a result, the time it takes to retransmit data when a data transmission error occurs is reduced, thereby minimizing the latency of final data transmission.

In this data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

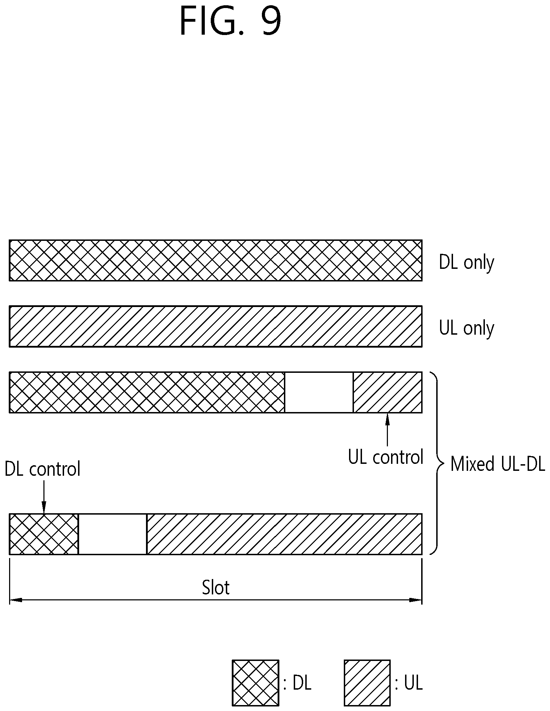

FIG. 9 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.

1. DL only configuration,
2. UL only configuration,
3. Mixed UL-DL configuration:

$$DL\ region + Guard\ period\ (GP) + UL\ control\ region,$$

$$DL\ control\ region + GP + UL\ region.$$

DL region: (i) DL data region, (ii) DL control region + DL data region.

UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

<Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

<Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH related with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process related with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.

1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

[Table 4]

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s ($0 \leq s < 40$), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is CSS or USS.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

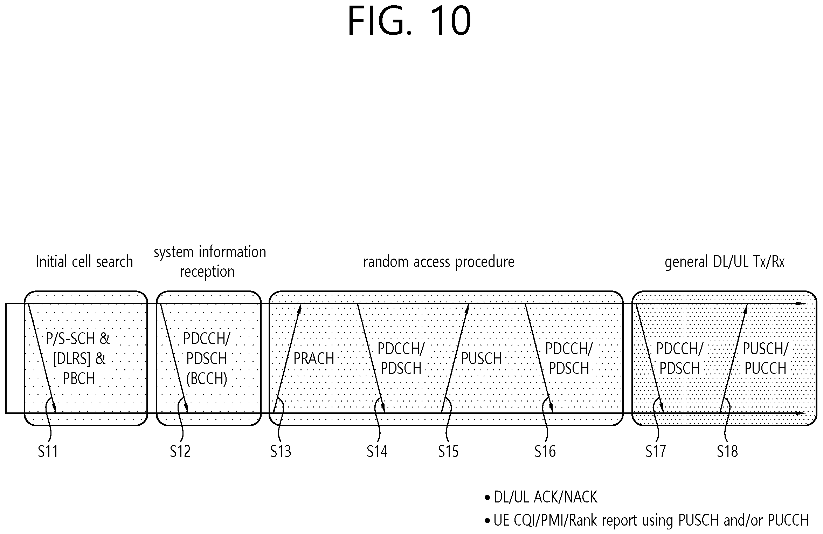

FIG. 10 illustrates physical channels and typical signal transmission.

Referring to FIG. 10, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure similarly to the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/indication of a network.

In order to enable reasonable battery consumption when bandwidth adaptation (BA) is configured, only one uplink BWP (bandwidth part) and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.

- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

Technical features described individually in one drawing in this specification may be implemented individually or simultaneously.

The following drawings were prepared to explain a specific example of the present specification. Since the names of specific devices or specific signals/messages/fields described in the drawings are provided as examples, the technical features of this specification are not limited to the specific names used in the drawings below.

The present disclosure proposes a method for determining an operating frequency resource of a mobile termination (MT) and a remote unit (RU) of a network-controlled repeater (NCR) in the operation of the NCR in an NR environment. Hereinafter, the relay may also be referred to as a repeater. Hereafter, MT may be referred to as NCR-MT, RU may be referred to as NCR-Fwd (forwarding).

<Transport network architecture for 5G>

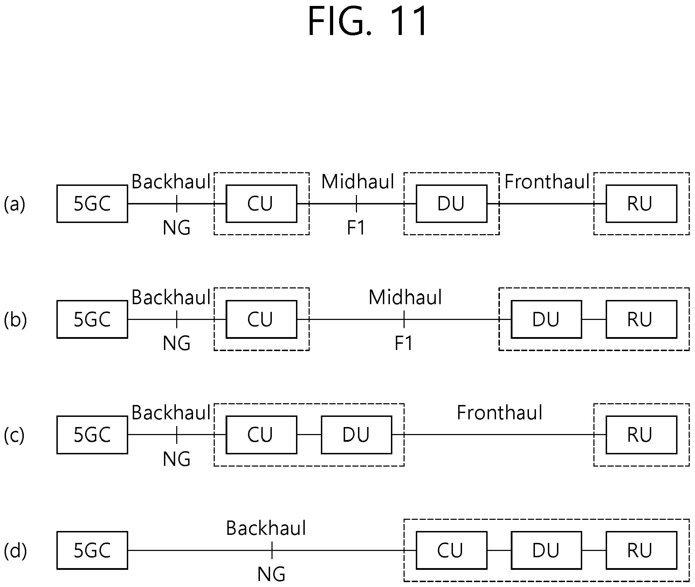

FIG. 11 illustrates transport network architectures for 5G.

The Telecommunication Standardization Sector (ITU-T) has adopted a transport network architecture for 5G that consists of three logical elements: Centralized Unit (CU), Distributed Unit (DU), and Remote Unit (RU), as shown in (a) of FIG. 11.

In this model, mid- and lower-layer functions are divided between DU and RU. RU implement RF functions and, depending on the functional split between RU and DU, also implement low-PHY and high-PHY functions, if possible. Depending on the network requirements, CU, DU, and RU may be grouped into different combinations to form the actual physical network elements.

For example, CU, DU, and RU may be grouped in various combinations, as shown in (b) to (d) of FIG. 11. This can provide flexibility to accommodate different network architectures, applications, and transport network requirements.

As shown in FIG. 11, the transport network between the 5GC and the CU is called backhaul. The backhaul network implements the 3GPP NG interface. Similarly, the transport network between the CU and the DU is called midhaul. The midhaul network implements the 3GPP F1 interface. Finally, the transport network between the DU and the RU is called fronthaul. Backhaul, midhaul, and fronthaul can be collectively referred to as xhaul.

Reconfigurable intelligent surfaces (RIS), also known as intelligent reflecting surfaces (IRS) and large intelligent surfaces (LIS), are programmable structures that can be used to control the propagation of electromagnetic waves (EM) by changing the electrical and magnetic properties of the surface.

In addition to electromagnetic control, RIS can be used to sense the wireless environment by incorporating sensing capabilities. By placing an RIS in an environment where wireless systems operate, it is possible to control at least partially the properties of the wireless channel.

The unique capabilities of RIS can provide a number of benefits, including the potential to improve reliability and coverage performance through beamforming or range extension. The ability to control the propagation environment is somewhat shifting the traditional wireless system design paradigm, where the radio channel is often viewed as an uncontrollable entity that distorts the transmitted signal. Traditionally, transmitters (TX) and receivers (RX) are designed to evenly distribute the effects of the channel. There are many scenarios that can be imagined, from placing a single RIS on a wall to sending signals coming from a predetermined direction.

RIS can be used to improve coverage in shaded areas by providing the 'penetration effect' of base station signals from outside into the building, and the 'reflection effect' of a non-line-of-sight environment.

<Network-controlled repeater in NR>

(1) Conventional RF repeater

A (conventional) RF repeater is a non-regenerative type of relay node that simply amplifies and forwards whatever it receives. The main advantages of RF repeaters are their low cost, ease of deployment, and the fact that they do not add latency. Their main disadvantage is that they amplify signals and noise, which can contribute to increased interference (contamination) in the system.

(2) Rel-17 WI on RF repeater (RAN4)

RF repeaters are specified in Rel-17 of RAN4 for the FR1 band FDD/TDD and FR2 band. The Rel-17 Work Item Description (WID) contains only RF requirements. One of the RAN4 WIDs states that 'it is assumed that the repeater does not perform adaptive beamforming towards the UE'.

(3) Rel-18 Network controlled repeater for NR

Coverage is a fundamental aspect of cellular network deployment. Mobile operators rely on different types of network nodes to provide comprehensive coverage. Deploying regular full-stack cells is one option, but it may not always be possible (e.g., if there is no backhaul availability) or economically viable.

As a result, new types of network nodes were considered to give mobile operators more flexibility in network deployment. For example, Integrated Access and Backhaul (IAB) is a new type of network node that does not require wired backhaul and was introduced in Rel-16 and improved in Rel-17. Another type of network node is an RF repeater, which simply amplifies and forwards all signals it receives. RF repeaters were widely deployed in 2G, 3G, and 4G to supplement the coverage provided by regular full-stack cells.

RF repeaters provide a cost-effective means of extending network coverage, but they have limitations. RF repeaters simply perform amplification and forwarding tasks without considering the various factors that can improve performance. These factors can include semi-persistent and/or dynamic downlink/uplink configurations, adaptive transmitter/receiver spatial beamforming, information for ON-OFF states, and more.

A network controlled repeater (NCR) has an improved function for receiving and processing side control information from the network compared to existing RF repeaters. Side control information enables the network controlled repeater to perform amplification and forwarding tasks in a more efficient manner. Potential benefits include mitigation of unnecessary noise amplification, better spatially instructed transmission and reception, and simplified network integration.

Research on network controlled repeaters (NCRs) can focus on the following scenarios and assumptions.

Network controlled repeaters are in-band RF repeaters used to extend network coverage in the FR1 and FR2 bands, and FR2 deployment can be prioritized for both outdoor and O2I scenarios.

The network controlled repeater can be transparent to the UE.

The network controlled repeater can simultaneously maintain a base station-to-repeater link and a repeater-to-UE link.

Cost-effectiveness is a key consideration for network controlled repeaters.

The side control information below needs to be studied and identified.

Beamforming information, timing information to align the transmit and receive boundaries of network controlled repeaters, UL-DL TDD configurations information, ON-OFF information for efficient interference management and energy efficiency, and power control information for efficient interference management.

Research and identification of L1/L2 signals (including their configurations) to convey side control information may be required. In terms of the management of network controlled repeaters, it is necessary to study the identification and authentication of network controlled repeaters.

NCR can be considered to be composed of RU and MT.

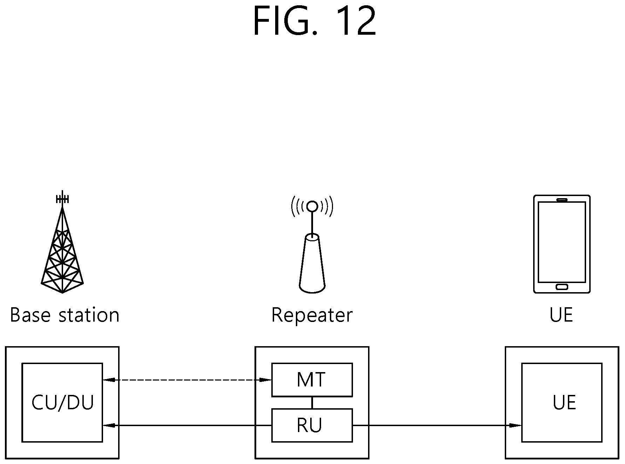

FIG. 12 shows an example of a topology in which NCR performs transmission and reception between a base station and a UE.

Referring to FIG. 12, a CU and/or DU exist in the base station, and the NCR may be connected to the base station. NCR may be composed of MT and RU.

The RU may consist of only the RF layer. The RU can receive signals transmitted by the base station at the RF layer and forward them to the UE, and can receive signals transmitted by the UE at the RF layer and forward them to the base station.

RU only relays signals between the base station and the UE, but does not generate signals/channels itself and transmit them to the base station/UE or receive signals/channels from the base station/UE and detect them.

In order to forward the received signal, the RU may consider adjusting the transmit/receive beam direction, DL/UL direction, ON/OFF status, transmit (Tx) power, etc. at the RF end. However, the operation of the RU cannot be determined by the NCR itself, but can be controlled entirely by the base station.

The MT can include an RF layer and L1, L2, and/or L3 layers. For example, the MT may comprise an RF layer and an L1 layer or an L1/L2 layer alone. Alternatively, the MT may comprise an RF layer and L1/L2/L3 layers.

The MT may detect/receive signals/channels transmitted by the base station, and the MT may generate and transmit signals/channels to the base station. In addition, the MT may receive from the base station information necessary to control the operation of the RU (i.e., side control information). The MT does not perform any transmission or reception with the UE.

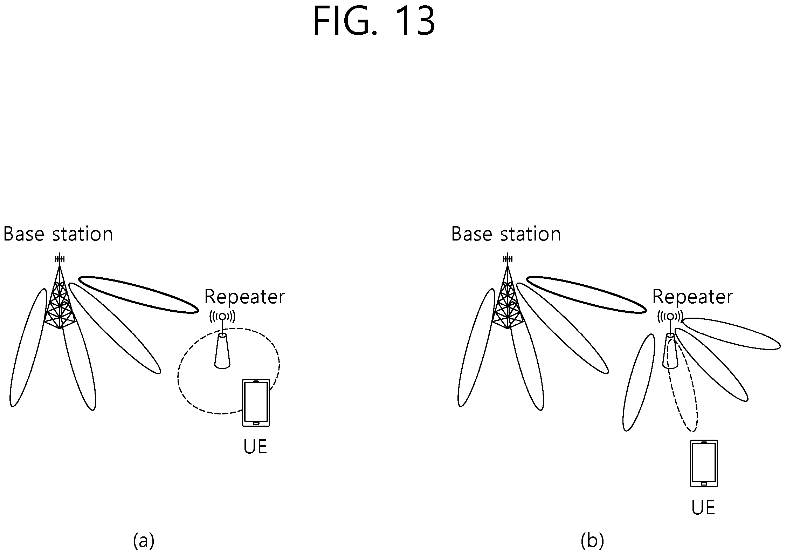

FIG. 13 shows a diagram comparing the operation of NCR and a conventional RF repeater.

Referring to (a) of FIG. 13, in the case of the conventional RF repeater, beamforming was performed applying omnidirection or fixed direction. On the other hand, in NCR, beamforming gain can be obtained by adaptively adjusting the Tx/Rx beam direction of the NCR according to the location of the UE and the channel situation of the UE, as shown in (b) of FIG. 13.

In conventional RF repeaters, it does not distinguish between DL/UL directions in the TDD system and always performs simultaneous transmissions and receptions in both DL and UL directions. Or it only applies fixed TDD configurations to switch between DL and UL directions in a fixed time pattern. On the other hand, in NCR, it is allowed the NCR to perform DL/UL switching by taking into account the TDD configurations. This enables adaptive DL/UL operation and reduces power waste and interference caused by forwarding unnecessary signals.

Conventional RF repeaters always amplify the power of the signal they receive, regardless of whether the base station and UE are transmitting a signal or not. This unnecessarily wastes power and increases interference to the surrounding area. In the case of NCR, it is possible to perform ON/OFF operation to avoid unnecessary signal transmission by turning off the RU when there is no signal to transmit to the base station/UE.

In the case of conventional RF repeaters, the power of the received signal is amplified and transmitted in a fixed ratio. In the case of NCR, the effect of interference on the surrounding area can be reduced by reducing the transmission power of the NCR when transmitting signals with unnecessarily high power, and increasing the transmission power of the NCR when transmitting signals with low power to ensure that the signal is reliably delivered to the receiver.

In the case of conventional RF repeaters, the DL/UL slot boundaries are not known. However, in the case of NCR, the NCR needs to know the transmit and receive boundaries of DLs and ULs in order to adaptively adjust beamforming, ON/OFF, DL/UL direction, Tx power, etc. as described above. This allows the operation of the RU to be adapted differently for each unit of time (e.g., slot/symbol).

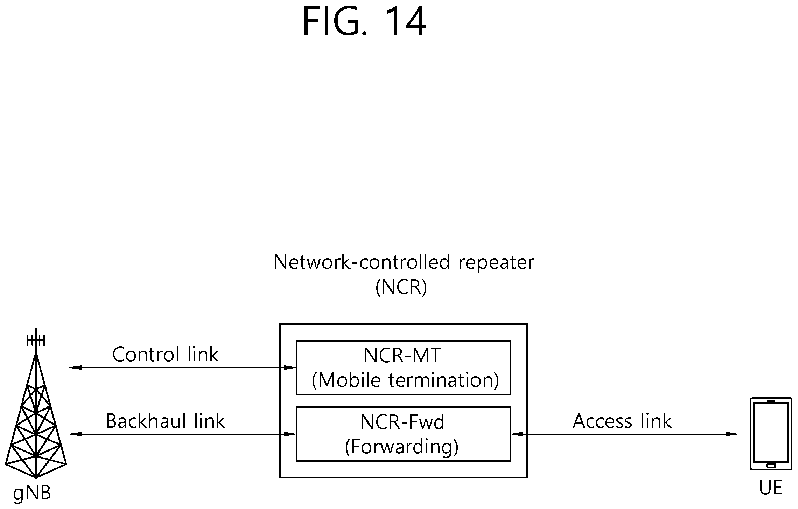

FIG. 14 illustrates a link between a base station, an NCR, and a UE.

Referring to FIG. 14, NCR may include NCR-MT and NCR-Fwd.

NCR-MT can be defined as a functional entity that communicates with a base station (gNB) over a control link (C-link) to enable information exchange (e.g. side control information). The C-link can be based on the NR Uu interface.

Side control information may be at least information for NCR-Fwd control.

The NCR-Fwd can be defined as a functional entity that performs the amplification and forwarding of UL/DL RF signals between the base station and the UE (terminal) over the backhaul link and the access link. The operation of the NCR-Fwd is controlled by the side control information received from the base station.

The contents of this disclosure are described assuming operation in an NCR. However, the contents of this disclosure may also be applied to devices other than NCR. In particular, the contents of the present disclosure can be applied to the operation of RIS. For this purpose, the NCR mentioned in the present disclosure can be replaced with RIS and extended/interpreted. In this case, the RU plays the role of forwarding signals from the base station to the UE and forwarding signals from the UE to the base station in the RIS, and the MT can play the role of receiving side control information from the base station to control the signal transmission of the RU.

Based on the above discussion, this disclosure proposes an association between side control information and time domain resources in the operation of the NCR.

In the present disclosure, the term "network" may be interpreted as being replaced with a base station or a CU/DU. In addition, the term "base station" may be interpreted as being replaced with a network, a CU, or a DU.

In NCR, in order to forward the signal received by the RU, it may be considered to adjust the transmit/receive beam direction, DL/UL direction, ON/OFF, transmission power, etc. at the RF end. However, the operations of the RU cannot be determined by the NCR on its own, but can be controlled entirely by the base station. To this end, the MT may receive from the base station the information necessary to control the operations of the RU (i.e., side control information). This side control information can be conveyed via L1/L2 signalling such as DCI, MAC-CE, etc.

Side control information may include, for example, all or part of the following information.

1) Beamforming information. This can mean information about the Tx/Rx beam direction of the RU. This information may include beam directions for UL Tx to the base station, DL Rx from the base station, DL Tx to the UE, and/or UL Rx from the UE.

2) Timing information to align transmission/reception boundaries of network-controlled repeater. This may mean information for the RU to align Tx/Rx slot or symbol boundaries.

3) Information on UL-DL TDD configuration. This can mean information on the DL/UL direction of the RU.

4) ON-OFF information for efficient interference management and improved energy efficiency. This may mean information about the ON-OFF operation of the RU.

5) Power control information for efficient interference management. This may mean information about the transmissoin power of the RU. Such information may include UL transmission power to the base station and/or DL transmission power to the UE.

Side control information may be applied differently by different time resources. In this case, it may be necessary to indicate the side control information on a per-time resource basis.

When side control information is sent via MAC-CE and/or DCI, it is possible that side control information is sent over different MAC-CEs and/or DCIs for different time resource units. In this case, there is a burden of sending side control information for each time resource unit. In view of this, it is possible to specify the side control information for multiple time resource units in a single transmission of side control information. This may result in a disadvantage in that the side control information for the plurality of time resource units should be predetermined and set in advance, but efficient signalling is possible.

Below, considering these points, it is proposed a method for determining a time resource to which side control information is applied in NCR and a method for indicating side control information for multiple time resources.

In this disclosure, it is proposed a method for determining a time resource to which side control information is applied, and a method for indicating side control information for multiple time resources, for side control information transmitted from a base station to an MT for RU operation in NCR.

<Time resource unit for side control information>

In this disclosure, when a base station indicates an MT about side control information applicable to an RU, a time resource unit of the side control information is proposed. At this time, the unit of time resource to which side control information is applied may be, for example, a slot. That is, side control information may be indicated in slot units.

To determine the actual time resource corresponding to this time resource unit, subcarrier spacing (SCS) information can be set. The length of the slot in the time domain can vary depending on the subcarrier spacing in the frequency domain used.

In the case of RU, it does not know the subcarrier spacing information and slot length information of the signal it forwards. Therefore, when the RU receives side control information, it cannot determine the actual time resource of the slot to which the side control information is applied. Taking this into account, the base station can set information about the subcarrier spacing applied to the RU to the MT. For example, reference subcarrier spacing (SCS) information applied to setting side control information for forwarding operation of RU can be set/provided to MT.

Depending on the embodiment, the time resource unit to which side control information is applied may be multiple slots. That is, side control information can be applied differently (or independently) per multiple slots. For example, when the side control information is applied in units of M (where M is a natural number greater than or equal to 2) slots (i.e., when the time resource unit for the side control information is M slots), the value of M may be a value set by the base station to the MT. The value of M may be semi-statically set from the base station to the MT via an RRC signal. Alternatively, the value corresponding to M may be indicateed to the MT from the base station via MAC-CE and/or DCI or the like at each transmission of side control information.

For ease of description, the following discussion assumes that the time domain resource unit for side control information is a slot. However, the present disclosure includes other units of time domain resources (e.g., multiple slots, a symbol, multiple symbols) instead of a slot.

<Method of indicating side control information for multiple time resources>

When the base station indicates the MT about side control information applicable to the RU, side control information for multiple time resource units may be indicateed together. In this case, specifically, the side control information for multiple time resources may be indicateed as follows.

Method 1. A method in which side control information applied per time resource unit is indicated.

For multiple time resources on a per time resource basis, the side control information that applies to each time resource may be specified. For example, for a plurality of slots, side control information applicable to each slot may be indicated. In this case, the multiple slots may refer to contiguous or non-contiguous slots.

To do this, N values of side control information are indicateed, where the nth indicateed value can mean the side control information that applies to the nth of the N slots. For example, 64 beam index values may be indicated by the side control information, and the nth beam index value may mean the beam index applied to the nth slot of the 64 slots.

Method 2. A method in which time resource information is indicated for each side control information to which the information is applied.

When side control information can have one of multiple values (or states), information about time resources to which the corresponding value (or state) is applied can be indicated for each value (or state) of the side control information. For example, side control information may indicate a set of slot indices to which a given value (or state) is applied for each of a plurality of values (or states).

For example, through side control information, slot indices to which each beam index is applied can be indicated for A beam indices.

Method 3. A method in which the starting position and/or duration information of the time resource to which the information is applied is indicated for each side control information.

By this method, MT can determine that the corresponding side control information is applied during the duration of the time resource from the starting position of the time resource.

Depending on the embodiment, the MT may receive from the base station a value of K corresponding to a starting position to which the side control information is applied and a value of D corresponding to a duration. In this case, the MT may determine that the side control information is applied during D slots starting from the time point K slots after the time point at which the side control information is received.

In some embodiments, the MT may determine the starting position of a time resource to which side control information is applied without a separate instruction(/indication). For example, MT may determine that the starting position of the time resource is applied from a point in time after K' slots from the point in time when the corresponding side control information is received. In this case, the value of K' may be defined as a specific value in the standard specification.

This instruction(/indication) may contain side control information for D time resource units (e.g., D slots). At this time, the duration D value may be fixed to the standard specification or may be flexibly determined within a specified range when indicating side control information. Depending on the embodiment, the values that can be used as the above duration D may be the same as or part of the values of the durations/periods that the TDD configuration can have. Alternatively, the values that can be used as the duration D can include multiples of the values of the duration/period that the TDD configuration can have.

These indications may be applied periodically or aperiodically. In some embodiments, for side control information instructed(indicated) by MAC-CE, the instructed information may be applied periodically. On the other hand, for side control information instructed by the DCI, the instructed information may be applied aperiodically.

When the indication is applied periodically, it can be applied periodically for P time resource units (e.g., P slots). The value of the period P may be fixed in a standard specification or may be set by the base station. Alternatively, it may be set together with the indication from the base station in the side control information. Alternatively, the period P value may be the same as the duration D value above.

<Method of indicating the side control information for a single time resource>

When the base station instructs the MT on the side control information applicable to the RU, the side control information may be instructed to a specific time resource unit. When the MT receives the side control information, the side control information may be applied to a specific time resource (e.g., slot).

To this end, the time resource to which side control information is applied can be determined in the following way.

Method 1. When transmitting side control information, slot index information to which the side control information is applied can be indicated together. NCR can determine that the side control information is applied in the slot corresponding to the slot index.

Method 2. If side control information is indicated (received) in a specific slot #n, it can be determined that the corresponding side control information is applied in slot #n+K. At this time, the value of K can be 1) specified as a specific value in the standard specification, 2) set to semi-static (semi-persistent), or 3) indicated together with the side control information.

<2 steps indication for side control information>

For effective signaling, side control information applied to the RU can be indicated through multiple steps. The same side control information can be applied to the time duration in which periodic signals such as SS/PBCH or CSI-RS are transmitted. In this time duration, the RU can operate with the same DL direction and perform ON operation to have the same Tx beam direction. In this case, it is effective from the signaling overhead perspective that the same side control information is applied periodically.

On the other hand, when performing dynamic DL/UL transmissions and receptions, the side control information applied to different time resources may be different, and the side control information needs to be indicated dynamically. In such cases, it is effective for the side control information to be applied aperiodically to specific time resources only.

In view of this, the present disclosure proposes a method for indicating side control information in a plurality of steps as follows. The side control information may comprise a first signalling and a second signalling as follows.

1) First signaling

First, in a first signalling, side control information for single or multi-slot resources may be instructed to the MT from the base station. In this case, for example, the method described in <Method of indicating side control information for multiple time resources> above may be used. Such first signalling may be applied periodically or semi-persistently. In this case, such first signalling may be signalled, for example, via RRC or MAC-CE.

2) Second signaling

Additionally or independently, side control information for single or multi-slot resources can be indicated from the base station to the MT. In this case, for example, the method described in <Method of indicating side control information for multiple time resources> or <Method of indicating the side control information for a single time resource> can be used. This second signaling can be applied aperiodically. The second signaling can be signaled, for example, via MAC-CE or DCI.

For example, in a first signalling, side control information for multiple slots may be signalled via MAC-CE, and then in a second signalling, side control information for a single or a set of slots may be signalled via DCI.

Alternatively, as another example, in a first signalling, side control information for multiple slots may be signalled via MAC-CE, and such signalling may be applied periodically. Then, in a second signalling, side control information for single or multiple slots is signalled via DCI, and such signalling may be applied aperiodically.

Alternatively, the first signalling may refer to a signalling that is delivered earlier and the second signalling may refer to a signalling that is delivered later. For example, both the first signalling and the second signalling may be signalling instructed through the DCI on an aperiodic basis, with the first signalling being instructed earlier in time and the second signalling being instructed later.

Both the first signaling and the second signaling can be transmitted for a specific time resource. Taking this into account, the following can be done.

Alt 1. Priority for first signaling

A first signaling may be transmitted at a specific time resource and a second signaling may be transmitted additionally. In this case, the MT applies the first signaling information and does not apply the second signaling information.
If the first signaling is transmitted in a specific time resource, the second signaling is not transmitted. If the first signaling is not transmitted in a specific time resource, the second signaling can be transmitted. That is, the MT expects that the second signaling is not transmitted in the time resource where the first signaling is transmitted.

Alt 2. Priority for secondary signaling

A first signaling may be transmitted at a specific time resource and a second signaling may be transmitted additionally. In this case, the MT overrides the first signaling information with the second signaling information.

Alt 3. Priority for secondary signaling in 'OFF' resources

The second signaling can be transmitted only for resources for which the RU is explicitly/implicitly determined to operate 'OFF' by the first signaling. In this case, the MT overrides the first signaling with the second signaling on the corresponding time resource.
In a specific time resource, a first signaling is transmitted, but a second signaling may be transmitted additionally. In this case, in a resource where the RU is explicitly/implicitly determined to operate 'OFF' by the first signaling, the MT overrides the first signaling information with the second signaling information.
When side control information is indicated in a periodic, semi-persistent, or aperiodic manner, a conflict may occur between multiple (e.g., two) indications for the same resource.
In the case of existing UEs, if we look at cases where collisions occur between transmissions of different signals/channels, as in the following examples, there may be cases where transmission of a previously scheduled signal/channel is not actually transmitted due to transmission of a later scheduled signal/channel.

i) When eMBB data transmission is not performed due to transmission of URLLC data, and URLLC data is transmitted.

ii) When there is a collision between SRS transmission resources and PUSCH/PUCCH transmission resources, SRS transmission is not performed due to PUSCH/PUCCH transmission, and PUSCH/PUCCH is transmitted.

Considering the behavior of these existing UEs, it may be necessary to have an operation where a new beam indication overrides a previous beam indication for the same time resource. For example, if there is a conflict between indications of at least semi-static, semi-persistent side control information and indications of dynamic side control information, an operation may be required to apply indications of the dynamic side control information rather than of the semi-static side control information.
Alternatively, it may be necessary to override the side control information indicated earlier in the resource where the conflict occurred with the side control information indicated later.
Meanwhile, for some signals/channels such as SSB, it is not expected that a conflict with other signals/channels will occur, or when a conflict with the transmission of a newly scheduled signal/channel occurs, the transmission of the SSB shall be prioritised without performing the transmission of the newly scheduled signal/channel.
Considering this, if the side control information is set semi-static for the forwarding operation of a signal/channel such as SSB, in such resources, it should not be overridden by newly signaled side control information even if a conflict with the newly signaled side control information occurs later.

<Indication of priority information>

In the case where multiple (e.g., two) side control information conflict for the same time resource, it may be necessary to differ in which side control information is given priority for each time resource. Considering this, when setting/indicating side control information, information on the priority related to the application of the corresponding side control information may be indicated together.
For example, the setting of semi-static side control information may be accompanied by the priority information of that setting. Such priority information can indicate whether the side control information should take precedence in the event of a conflict with other side control information. For example, if the priority information is 0, it could mean that the priority of the setting is low, and if the priority information is 1, it could mean that the priority of the setting is high. This priority information can be set for each configuration, or independently per time resource within a configuration, or independently per beam index within a configuration.

Additionally, for example, when indicating aperiodic side control information, priority information of the corresponding setting may be indicated together. This priority information can indicate whether the side control information has priority when it conflicts with other side control information. For example, if the priority information is 0, it could mean that the priority of the setting is low, and if the priority information is 1, it could mean that the priority of the setting is high. This priority information can be set per aperiodic indication, or independently per time resource within an aperiodic indication, or independently per beam index within an aperiodic configuration.

A priority flag can be introduced for each list of periodic indications and semi-static/semi-persistent indications. The above flag can be used to give priority to periodic and semi-static indications over aperiodic indications.

In case of conflicting beam indications among different types of indications, priority may be given in the following order: 1) aperiodic beam indications, 2) semi-static (semi-persistent) beam indications, and 3) periodic beam indications. If the above flag is present, periodic and semi-static indications may have priority over aperiodic indications.

It may be expected that no collisions between periodic beam indications. And it may be also expected no collisions between semi-static (semi-persistent) indications.

If there is a conflict between two aperiodic indications, the most recent indication is deemed to have priority.

<Operation based on priority information>

In the case of two conflicting side control information on the same time resource, the following operations can be taken according to the two side control information.

1) If the priority information of two side control information is different, the NCR can apply the content of the side control information with higher priority without applying the side control information with lower priority in the corresponding time resource.

2) When the priority information of two side control information is the same or when there is no priority information in two side control information, i) NCR may apply the side control information set/indicated later without applying the side control information set/indicated earlier. Or ii) NCR can dynamically apply side control information indicated via DCI without applying side control information set semi-statically by RRC/MAC-CE, etc.

3) When priority information exists in one side control information and priority information does not exist in the other side control information, i) if the priority information of the side control information where priority information exists is low, the NCR may apply the information of the side control information without priority information without applying the side control information with low priority information. Or ii) if the priority information of the side control information where priority information exists is high, the NCR may apply the information of the side control information with high priority information without applying the side control information without priority information.

<Operation on time resources where side control information is not indicated>

In the case of a conventional repeater, regardless of whether it actually transmits or receives a meaningful signal/channel, it always forwards the signal received by the base station to the UE, and forwards the signal received from the UE to the base station.

This operation may waste power of the NCR and cause unnecessary interference to surrounding UEs and base stations. Considering this, the base station can instruct the ON-OFF operation of the NCR through side control information. For example, the base station can inform the NCR of the time resources to which the side control information applies. At this time, it is unclear how the NCR will operate on time resources to which the side control information is not indicated.

When side control information is indicated by time resource unit, there may be cases where side control information is not indicated for a specific time resource. When side control information is not indicated for a specific time resource, the following operations can be performed.

Alt a. RU can operate by applying default side control information. The default value of the side control information can correspond to a specific value (or specific state) among multiple values (or states) that the side control information has. Alternatively, the default value of the side control information may be set from the base station to the MT. The default value of the side control information or the value (or state) of the side control information corresponding to the default value may be defined in the standard specification or may be a value set by the base station to the MT.

Alt b. The RU may not operate on that time resource. That is, RU may determine the resource as a resource performing 'OFF' operation and may not perform signal forwarding operation on the resource.

The methods described above may be applied only for certain side control information. For example, the above methods may be applied when no information about beam direction is indicated in a specific slot resource. Alternatively, the above methods may be applied when no information about DL/UL direction is indicated in the slot resource.

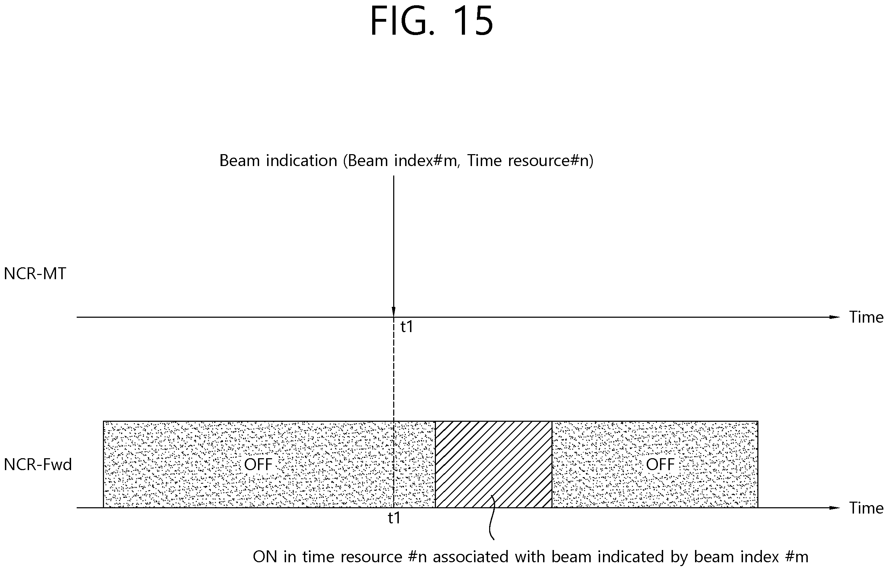

FIG. 15 illustrates the operation of NCR.

Referring to FIG. 15, an NCR includes an NCR-MT and an NCR-Fwd. The NCR-MT may receive a beam indication from the base station, for example, at time t1. The beam indication is information for {beam index, time resource}, which may be provided via RRC signal/message or DCI.

For example, RRC signaling may be used for periodic beam indication for the access link. The above RRC signal may include a list including X ($1 \leq X \leq X_{max}$) forwarding resources capable of performing forwarding operations of the NCR-MT. Here, each forwarding resource can be defined as {beam index, time resource}.

The time resource may be defined as, for example, {a starting slot defined by a slot offset (within one period), a starting symbol defined by a symbol offset within a slot, and a duration defined by a number of symbols}. For example, a slot separated by a slot offset from the point at which a period begins may be the starting slot of the time resource, a symbol separated by a symbol offset from the first symbol of the starting slot may be the starting symbol of the time resource, and a number of symbols from the starting symbol as indicated by the duration may be the symbols of the time resource.

For periodic beam indication, the RRC signal can also set a periodicity. The same periodicity can be assumed for all time resources within one periodic beam indication.

For periodic beam indication, the RRC signal can also set a reference SCS (subcarrier spacing). The same reference SCS can be assumed for all time resources within one periodic beam indication.

For example, for semi-persistent beam indication, the RRC signal may contain Y lists, and the y-th list may contain $Z_y$ forwarding resources ($1 \leq Z_y \leq Z_{max}$). $Z_{max}$ may mean the maximum number of beams that can be indicated by a single indication, for example, 128. Each forwarding resource may be defined as {beam index, time resource}. The periodicity and reference SCS may be set for each list by the RRC signal. For example, the periodicity and reference SCS may be set independently for each list by the RRC signal. The MAC-CE may activate/de-activate one of the Y lists, in which case all $Z_y$ forwarding resources within that list are selected. The MAC-CE may provide an update of the $Z_y$ beam indexes.

For example, for aperiodic beam indication for an access link, a single DCI may be used and may contain the following information.

$L_{max}$ fields can be used to specify beam information. Each field may indicate one beam index or correspond to one beam index. The bitwidth of each field may be determined by the number of beams used for the access link.

$T_{max}$ fields may be used to indicate time resources. A list of time resources may be predefined by RRC signalling. The bitwidth of each field may be determined by the length of the list. The $T_{max}$ value can be equal to $L_{max}$ (i.e., $T_{max} = L_{max}$). The $T_{max}$ value may always be equal to $L_{max}$. The value of $T_{max}$ may be configured by RRC signaling.

For aperiodic beam indication to the access link, via DCI, $T_{max} = L_{max}$ is supported (or the value of $T_{max}$ is always equal to $L_{max}$), and the time resource indication and beam indication may be mapped 1:1 sequentially. In addition, for aperiodic beam indication to the access link, the reference SCS for the time resource may be set by RRC signalling for time resource configuration.

The NCR-Fwd is expected to be OFF unless explicitly or implicitly instructed otherwise by the base station. For FR1 and FR2, which are NR frequency bands, the ON state of NCR-Fwd is indicated from the base station. For example, the ON state of the NCR-Fwd can be indicated via the beam indication mentioned above. When there is a beam indication, the NCR-Fwd is assumed to be in ON state in the time domain resource associated(related) with the corresponding beam.

Let us assume that in FIG. 15, a beam indication is received from the base station at t1, and that the beam indication indicates {beam index #m, time resource #n}. In this case, NCR-Fwd is in ON state in the time resource #n associated with the beam indicated by beam index #m. And, in other time resources where the ON state is not explicitly/implicitly instructed by the base station, NCR-Fwd is in OFF state (or is assumed/expected/determined to be in OFF state).

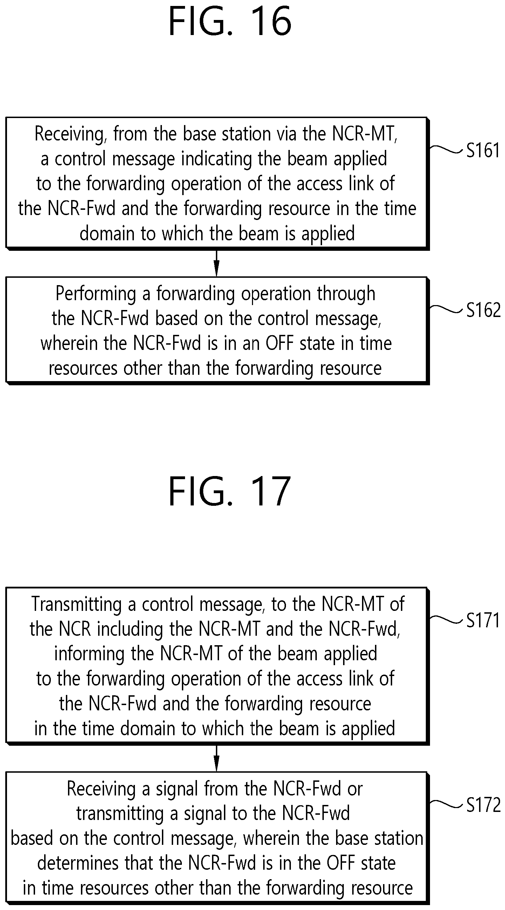

FIG. 16 illustrates an operating method of NCR.

Referring to FIG. 16, the NCR comprising the NCR-MT and the NCR-Fwd receives from the base station via the NCR-MT a control message indicating the beam applied to the forwarding operation of the access link of the NCR-Fwd and the forwarding resource in the time domain to which the beam is applied (S161). Here, the access link means a link between the NCR-Fwd and the UE.

The forwarding resource can be defined by i) a starting slot defined by a slot offset, ii) a starting symbol defined by a symbol offset within a slot, and iii) a duration defined by a number of symbols. That is, the forwarding resource is a time domain resource and is associated(related) with a beam indicated by the control message. The beam may be indicated by, for example, a beam index included in the control message.

NCR performs a forwarding operation through the NCR-Fwd based on the control message (S162). NCR-Fwd is in an OFF state (or is assumed/expected/determined to be in an OFF state) in time resources other than the forwarding resource. Additionally, NCR-Fwd is in an ON state (or is assumed/expected/determined to be in an ON state) in the forwarding resource associated(related) with the beam. NCR-Fwd may perform forwarding operations in the ON state and may not perform forwarding operations in the OFF state.

According to this method, if there is no separate explicit/implicit indication from the base station, NCR-Fwd operates in the OFF state by default. By clarifying the operation of NCR-Fwd in this way, ambiguities in the understanding of the operation between the base station and the NCR can be avoided. It also reduces unnecessary signalling to the NCR and avoids unnecessary interference to neighboring devices.

NCR-MT may be in an RRC (radio resource control) connection state with the base station. Or, NCR-MT may be in an RRC idle/inactive state and may perform DRX operation to control ON-OFF operation of NCR-Fwd.

The above control message may be an RRC signal/message, DCI.

The forwarding operation of NCR-Fwd may include at least one of a first forwarding operation that amplifies a first signal received from a UE and forwards it to the base station, or a second forwarding operation that amplifies a second signal received from the base station and forwards it to the UE.

When different beam indications(indications) conflict with each other for a specific time resource, priority can be given in the following order: aperiodic beam indication, semi-persistent(semi-static) beam indication, and periodic beam indication.

However, if there is priority information (priority flag) in the semi-static beam indication or the periodic beam indication, the semi-static beam indication or the periodic beam indication may have a higher priority than the aperiodic beam indication.

FIG. 17 illustrates the operation method of the base station.

Referring to FIG. 17, the base station transmits a control message to the NCR-MT of the NCR including the NCR-MT and the NCR-Fwd, informing the NCR-MT of the beam applied to the forwarding operation of the access link of the NCR-Fwd and the forwarding resource in the time domain to which the beam is applied (S171). Here, the access link means the link between the NCR-Fwd and the UE.

The base station receives a signal from the NCR-Fwd or transmits a signal to the NCR-Fwd based on the control message, wherein the base station determines/expects/assumes that the NCR-Fwd is in the OFF state in time resources other than the forwarding resource (S172). Additionally, the base station determines/expects/assumes that NCR-Fwd is the ON state in the forwarding resource associated(related) with the beam.

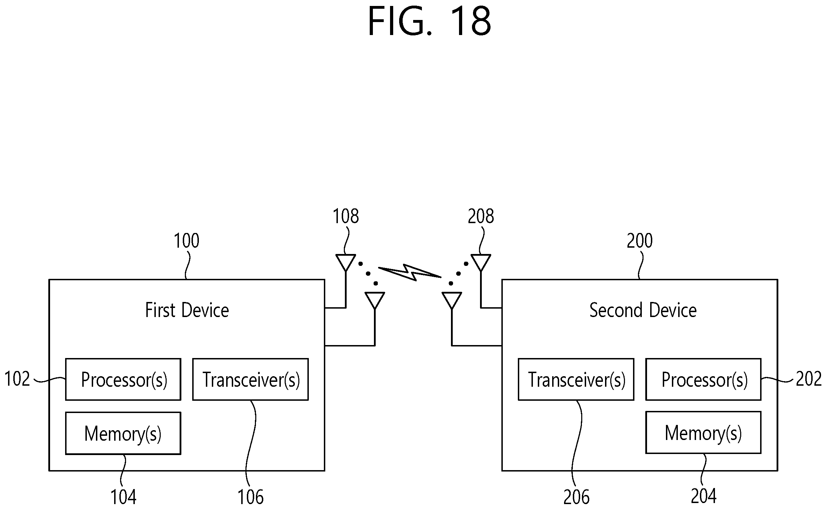

FIG. 18 illustrates a wireless device applicable to the present specification.

Referring to FIG. 18, a first wireless device 100 and a second wireless device 200 may transmit radio signals through a variety of RATs (e.g., LTE and NR).

The first wireless device 100 may include one or more processors 102 and one or more memories 104 and additionally further include one or more transceivers 106 and/or one or more antennas 108. The processors 102 may control the memory 104 and/or the transceivers 106 and may be configured to implement the descriptions, functions, procedures, proposals, methods, and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processory 102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip.

The processor 102 may be included in an NCR including a network-controlled repeater (NCR)-MT (mobile termination) and an NCR-Fwd (Forwarding). The processor 102 receives a control message from the base station via the NCR-MT, and performs a forwarding operation via the NCR-Fwd based on the control message. The control message indicates a beam to be applied in the forwarding operation for the access link of the NCR-Fwd and a forwarding resource in the time domain to which the beam is applied. The NCR-Fwd is in an OFF state in time resources other than the forwarding resource. Further, the NCR-Fwd is in an ON state in the forwarding resource associated(related) with the beam.

The second wireless device 200 may include one or more processors 202 and one or more memories 204 and additionally further include one or more transceivers 206 and/or one or more antennas 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip.

The processor 202 may be included in a base station. The processor 202 transmits a control message to the NCR-MT of an NCR comprising an NCR-MT and an NCR-Fwd, and receives signals from the NCR-Fwd or transmits signals to the NCR-Fwd based on the control message. The control message indicates a beam to be applied to the forwarding operation for the access link of the NCR-Fwd and a forwarding resource in the time domain to which the beam is applied. The processor 202 determines/assumes/expects that the NCR-Fwd is in an OFF state in time resources other than the forwarding resource. The processor 202 determines/assumes/expects that the NCR-Fwd is in an ON state at the forwarding resource associated(related) with the beam.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, the CRM performs: receiving a control message from a base station via an NCR-MT of an NCR comprising the NCR-MT and an NCR-Fwd, and performing a forwarding operation via the NCR-Fwd based on the control message. The control message indicates a beam to be applied in the forwarding operation on an access link of the NCR-Fwd and a forwarding resource in a time domain to which the beam is applied. The NCR-Fwd is in an OFF state in time resources other than the forwarding resource. The NCR-Fwd is in an ON state in the forwarding resource associated(related) with the beam.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

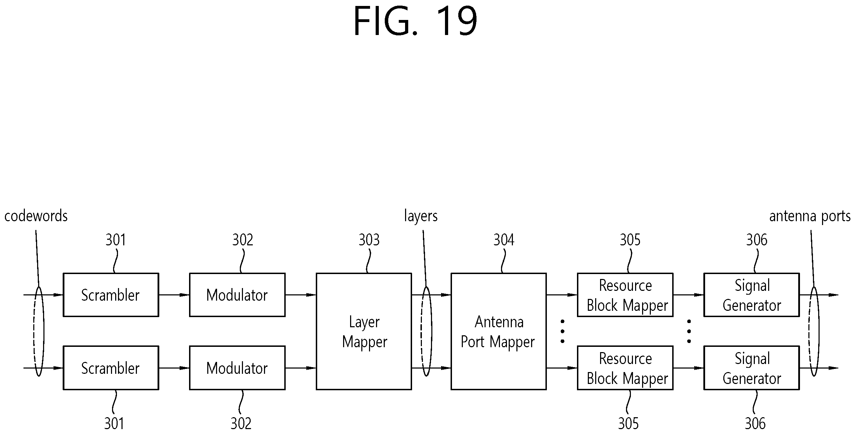

FIG. 19 shows an example of a structure of a signal processing module. Herein, signal processing may be performed in the processors 102 and 202 of FIG. 18.

Referring to FIG. 19, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

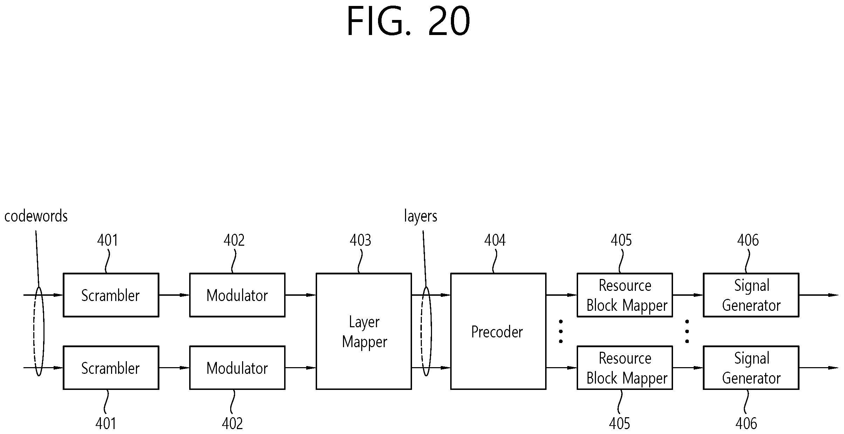

FIG. 20 shows another example of a structure of a signal processing module in a transmitting device. Herein, signal processing may be performed in a processor of a UE/BS, such as the processors 102 and 202 of FIG. 18.

Referring to FIG. 20, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402.

The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an $N \times M$ precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

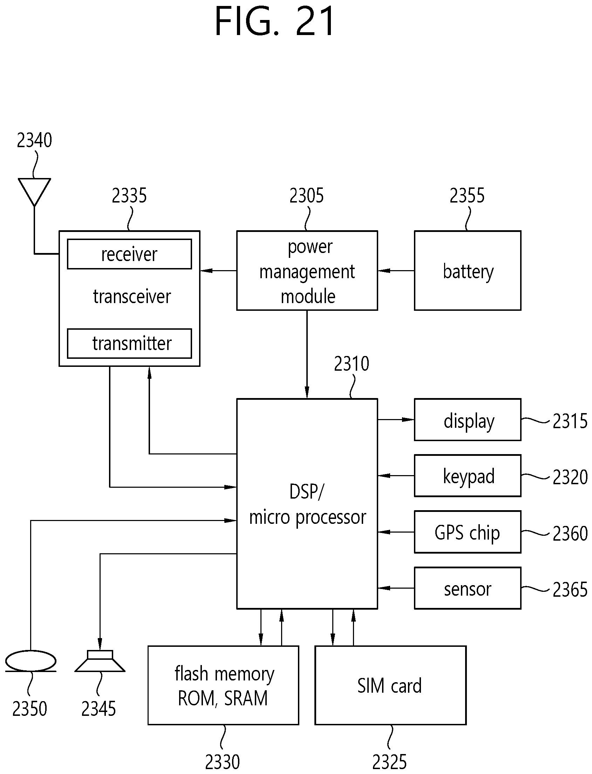

FIG. 21 illustrates an example of a wireless communication device according to an implementation example of the present disclosure.

Referring to FIG. 21, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 21 may be the processors 102 and 202 in FIG. 18.

The memory 2330 is connected to the processor 2310 and stores information related to operations of the processor. The memory may be located inside or outside the processor and connected to the processor through various techniques such as wired connection and wireless connection. The memory 2330 in FIG. 21 may be the memories 104 and 204 in FIG. 18.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 33 may be the transceivers 106 and 206 in FIG. 30.

Although not shown in FIG. 21, various components such as a camera and a universal serial bus (USB) port may be additionally included in the UE. For example, the camera may be connected to the processor 2310.

FIG. 21 is an example of implementation with respect to the UE and implementation examples of the present disclosure are not limited thereto. The UE need not essentially include all the components shown in FIG. 21. That is, some of the components, for example, the keypad 2320, the GPS chip 2360, the sensor 2365 and the SIM card 2325 may not be essential components. In this case, they may not be included in the UE.

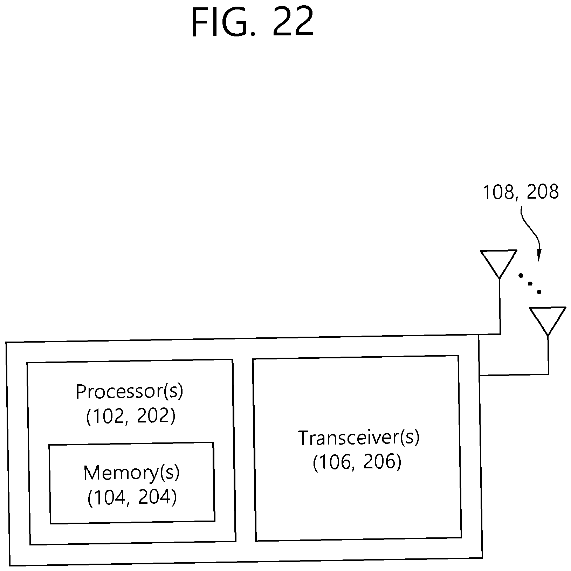

FIG. 22 shows another example of a wireless device.

Referring to FIG. 22, the wireless device may include one or more processors 102 and 202, one or more memories 104 and 204, one or more transceivers 106 and 206 and one or more antennas 108 and 208.

The example of the wireless device described in FIG. 22 is different from the example of the wireless described in FIG. 18 in that the processors 102 and 202 and the memories 104 and 204 are separated in FIG. 18 whereas the memories 104 and 204 are included in the processors 102 and 202 in the example of FIG. 22. That is, the processor and the memory may constitute one chipset.

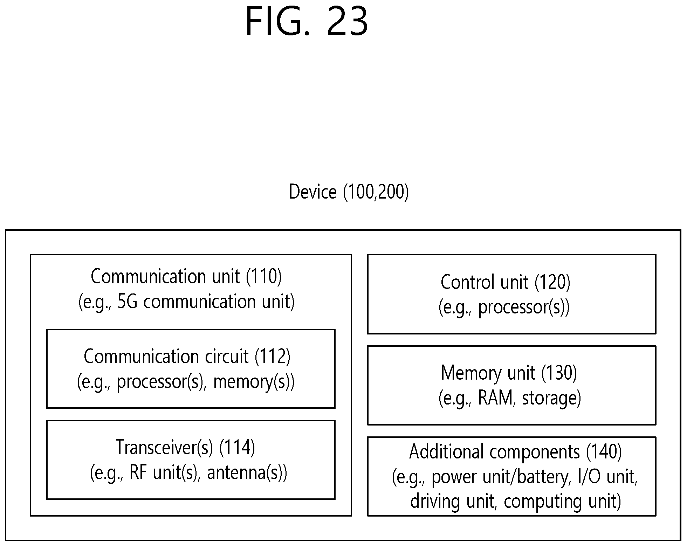

FIG. 23 shows another example of a wireless device applied to the present specification. The wireless device may be implemented in various forms according to a use-case/service.

Referring to FIG. 23, wireless devices 100 and 200 may correspond to the wireless devices 100 and 200 of FIG. 18 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204. For example, the transceiver(s) 114 may include the one or more transceivers 106 and 206 and/or the one or more antennas 108 and 208 of FIG. 18. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. In addition, the control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

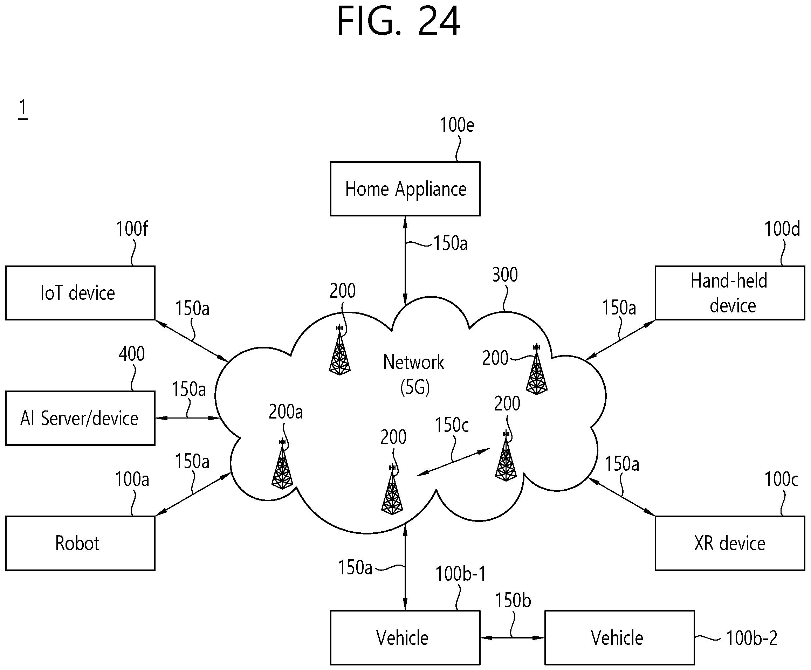

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot 100a of FIG. 24, the vehicles 100b-1, 100b-2 of FIG. 24, the XR device 100c of FIG. 24, the hand-held device 100d of FIG. 24, the home appliance 100e of FIG. 24, the IoT device 100f of FIG. 24, a digital broadcast UE, a hologram device, a public safety device, an MTC device, a medicine device, a fintech device (or a finance device), a security device, a climate/environment device, the AI server/device 400 of FIG. 24, the BSs 200 of FIG. 24, a network node, etc. The wireless device may be used in a mobile or fixed place according to a use-example/service.

In FIG. 23, various elements, components, units/parts, and/or modules within the wireless devices 100 and 200 may be entirely interconnected through a wired interface, or at least a portion may be wirelessly connected through the communication unit 110. For example, within the wireless devices 100 and 200, the control unit 120 and the communication unit 110 may be connected by wire, and the control unit 120 and the first unit (e.g., 130 and 140) may be connected through the communication unit 110. Additionally, each element, component, unit/part, and/or module within the wireless devices 100 and 200 may further include one or more elements. For example, the control unit 120 may be comprised of one or more processor sets. For example, the control unit 120 may be comprised of a communication control processor, an application processor, an electronic control unit (ECU), a graphics processing processor, and a memory control processor. As another example, the memory unit 130 includes random access memory (RAM), dynamic RAM (DRAM), read only memory (ROM), flash memory, volatile memory, and non-volatile memory. volatile memory) and/or a combination thereof.

FIG. 24 illustrates a communication system 1 applied to the present specification.

Referring to FIG. 24, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 5. For convenience of explanation, among the frequency ranges that are used in an NR system, FR1 may mean a "sub 6GHz range", and FR2 may mean an "above 6GHz range" and may also be referred to as a millimeter wave (mmW).

[Table 5]

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 6 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

[Table 6]

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

**Claims**

1.  A method of operating a network-controlled repeater (NCR) including an NCR-mobile termination (MT) and an NCR-forwarding (Fwd) in a wireless communication system, the method comprising:

    receiving a control message from a base station via the NCR-MT; and
    performing a forwarding operation via the NCR-Fwd based on the control message,
    wherein the control message informs a beam to be applied to the forwarding operation of an access link of the NCR-Fwd and a forwarding resource in a time domain to which the beam is applied, and
    wherein the NCR-Fwd is in an OFF state in time resources other than the forwarding resource.

2.  The method of claim 1, wherein the NCR-MT is in an RRC (radio resource control) connection state with the base station.

3.  The method of claim 1, wherein the control message is a radio resource control (RRC) signal.

4.  The method of claim 1, wherein the forwarding resource is defined by: i) a starting slot defined by a slot offset; ii) a starting symbol defined by a symbol offset within a slot; and iii) a duration defined by a number of symbols.

5.  The method of claim 1, wherein the beam is informed by a beam index included in the control message.

6.  The method of claim 1, wherein the NCR-Fwd is in an ON state in the forwarding resource related with the beam.

7.  The method of claim 6, wherein the NCR-Fwd performs the forwarding operation in the ON state and does not perform the forwarding operation in the OFF state.

8.  The method of claim 1, wherein the forwarding operation comprises at least one of: a first forwarding operation to amplify a first signal received from a user equipment (UE) and forward the first signal to the base station, or a second forwarding operation to amplify a second signal received from the base station and forward the second signal to the UE.

9.  The method of claim 1, wherein in a case of conflicting beam instructions for a specific time resource, the beam instructions have priority in a following order: an aperiodic beam instruction, a semi-persistent beam instruction, and a periodic beam instruction.

10. The method of claim 9, wherein based on the semi-persistent beam instruction or the periodic beam instruction having priority information, the semi-persistent beam instruction or the periodic beam instruction has a higher priority than the aperiodic beam instruction.

11. The method of claim 1, wherein the access link is a link between the NCR-Fwd and a user equipment (UE).

12. A network-controlled repeater (NCR) including an NCR-mobile termination (MT) and an NCR-forwarding (Fwd), the NCR comprising:

    at least one transceiver;
    at least one memory; and
    at least one processor operably coupled to the at least one memory and the at least one transceiver, wherein the at least one processor is adapted to:

        receive a control message from a base station via the NCR-MT; and

perform a forwarding operation via the NCR-Fwd based on the control message,
wherein the control message informs a beam to be applied to the forwarding operation of an access link of the NCR-Fwd and a forwarding resource in a time domain to which the beam is applied, and
wherein the NCR-Fwd is in an OFF state in time resources other than the forwarding resource.

13. The NCR of claim 12, wherein the NCR-MT is in an RRC (radio resource control) connection state with the base station.

14. The NCR of claim 12, wherein the control message is a radio resource control (RRC) signal.

15. The NCR of claim 12, wherein the forwarding resource is defined by: i) a starting slot defined by a slot offset; ii) a starting symbol defined by a symbol offset within a slot; and iii) a duration defined by a number of symbols.

16. The NCR of claim 12, wherein the beam is informed by a beam index included in the control message.

17. The NCR of claim 12, wherein the NCR-Fwd is in an ON state in the forwarding resource related with the beam.

18. The NCR of claim 17, wherein the NCR-Fwd performs the forwarding operation in the ON state and does not perform the forwarding operation in the OFF state.

19. The NCR of claim 12, wherein the forwarding operation comprises at least one of: a first forwarding operation to amplify a first signal received from a user equipment (UE) and forward the first signal to the base station, or a second forwarding operation to amplify a second signal received from the base station and forward the second signal to the UE.

20. The NCR of claim 12, wherein in a case of conflicting beam instructions for a specific time resource, the beam instructions have priority in a following order: an aperiodic beam instruction, a semi-persistent beam instruction, and a periodic beam instruction.

21. The NCR of claim 20, wherein based on the semi-persistent beam instruction or the periodic beam instruction having priority information, the semi-persistent beam instruction or the periodic beam instruction has a higher priority than the aperiodic beam instruction.

22. The NCR of claim 12, wherein the access link is a link between the NCR-Fwd and a user equipment (UE).

23. An apparatus of a network-controlled repeater (NCR) including an NCR-mobile termination (MT) and an NCR-forwarding (Fwd), the apparatus comprising:

at least one memory; and
at least one processor operably coupled to the at least one memory,
wherein the at least one processor is adapted to:

receive a control message from a base station via the NCR-MT; and
perform a forwarding operation via the NCR-Fwd based on the control message,
wherein the control message informs a beam to be applied to the forwarding operation of an access link of the NCR-Fwd and a forwarding resource in a time domain to which the beam is applied, and
wherein the NCR-Fwd is in an OFF state in time resources other than the forwarding resource.

24. At least one computer readable medium (CRM) having instructions to be executed by at least one processor to perform operations includes:

receiving a control message from a base station via a network-controlled repeater-mobile termination (NCR-MT) of a network-controlled repeater (NCR) including the NCR-MT and an NCR-forwarding (Fwd), and
performing a forwarding operation via the NCR-Fwd based on the control message,
wherein the control message informs a beam to be applied to the forwarding operation of an access link of the NCR-Fwd and a forwarding resource in a time domain to which the beam is applied, and
wherein the NCR-Fwd is in an OFF state in time resources other than the forwarding resource.

**25.** A method of operating a base station in a wireless communication system, the method comprising:

transmitting, to a network-controlled repeater-mobile termination (NCR-MT) of a network-controlled repeater (NCR) including the NCR-MT and an NCR-forwarding (Fwd), a control message; and
receiving a signal from the NCR-Fwd or transmitting a signal to the NCR-Fwd based on the control message, wherein the control message informs a beam to be applied to a forwarding operation of an access link of the NCR-Fwd and a forwarding resource in a time domain to which the beam is applied, and
wherein the base station determines that the NCR-Fwd is in an OFF state in time resources other than the forwarding resource.

**26.** A base station (BS), the BS comprising:

at least one transceiver;
at least one memory; and
at least one processor operably coupled to the at least one memory and the transceiver, wherein the at least one processor is adapted to:

transmit, to a network-controlled repeater-mobile termination (NCR-MT) of a network-controlled repeater (NCR) including the NCR-MT and an NCR-forwarding (Fwd), a control message; and
receive a signal from the NCR-Fwd or transmit a signal to the NCR-Fwd based on the control message, wherein the control message informs a beam to be applied to a forwarding operation of an access link of the NCR-Fwd and a forwarding resource in a time domain to which the beam is applied, and
wherein the base station determines that the NCR-Fwd is in an OFF state in time resources other than the forwarding resource.

# FIG. 1

# FIG. 2

# FIG. 3

# FIG. 4

EP 4 510 747 A1

**gNB**

| RRM between cells |
| RB control |
| Connection mobility control |
| Wireless access control |
| Measurement setting and provision |
| Dynamic resource allocation (scheduler) |

NG-RAN

**AMF**

| NAS security |
| Idle state mobility processing |

**UPF**

| Mobility anchoring |
| PDU processing |

5GC

**SMF**

| UE IP address allocation |
| PDU session control |

Internet

# FIG. 5

# FIG. 6

A carrier
(up to 3300 subcarriers,
i.e., 275 RBs)

A BWP

1RB=12 subcarriers

Resource grid

1 RE

1subcarrier

1 symbol

1=0 • • •

k=0

EP 4 510 747 A1

# FIG. 7

CCE #2    CCE #n

$N^{CORESET}_{RB}$ resource blocks

CCE #1

1, 2 or 3 OFDM symbols

# FIG. 8

Downlink only, or Uplink only

Frequency

RB index

| | 5 | | | | | | | | | | | | | |
| | 4 | | | | | | | | | | | | | |
| | 3 | | | | | | | | | | | | | |
| | 2 | | | | | | | | | | | | | |
| | 1 | | | | | | | | | | | | | |
| | 0 | | | | | | | | | | | | | |

Symbol index: 0 1 2 3 4 5 6 7 8 9 10 11 12 13

One TTI

DL Control channel        UL Control channel

# FIG. 9

DL only

UL only

Mixed UL-DL

UL control

DL control

Slot

: DL    : UL

# FIG. 10

Initial cell search — system information reception — random access procedure — general DL/UL Tx/Rx

P/S-SCH & [DLRS] & PBCH (S11)

PDCCH/ PDSCH (BCCH) (S12)

PRACH (S13) — PDCCH/ PDSCH (S14) — PUSCH (S15) — PDCCH/ PDSCH (S16)

PDCCH/ PDSCH (S17) — PUSCH/ PUCCH (S18)

- DL/UL ACK/NACK
- UE CQI/PMI/Rank report using PUSCH and/or PUCCH

# FIG. 11

(a) 5GC — Backhaul / NG — [CU] — Midhaul / F1 — [DU] — Fronthaul — [RU]

(b) 5GC — Backhaul / NG — [CU] — Midhaul / F1 — [DU — RU]

(c) 5GC — Backhaul / NG — [CU — DU] — Fronthaul — [RU]

(d) 5GC — Backhaul / NG — [CU — DU — RU]

EP 4 510 747 A1

# FIG. 12

# FIG. 13

(a)

(b)

# FIG. 14

Network-controlled repeater
(NCR)

gNB

Control link

Backhaul link

NCR-MT
(Mobile termination)

NCR-Fwd
(Forwarding)

Access link

UE

EP 4 510 747 A1

# FIG. 15

Beam indication (Beam index#m, Time resource#n)

NCR-MT

t1 ——→ Time

NCR-Fwd

OFF | | OFF

t1

ON in time resource #n associated with beam indicated by beam index #m

EP 4 510 747 A1

# FIG. 16

Receiving, from the base station via the NCR-MT, a control message indicating the beam applied to the forwarding operation of the access link of the NCR-Fwd and the forwarding resource in the time domain to which the beam is applied — S161

Performing a forwarding operation through the NCR-Fwd based on the control message, wherein the NCR-Fwd is in an OFF state in time resources other than the forwarding resource — S162

# FIG. 17

Transmitting a control message, to the NCR-MT of the NCR including the NCR-MT and the NCR-Fwd, informing the NCR-MT of the beam applied to the forwarding operation of the access link of the NCR-Fwd and the forwarding resource in the time domain to which the beam is applied — S171

Receiving a signal from the NCR-Fwd or transmitting a signal to the NCR-Fwd based on the control message, wherein the base station determines that the NCR-Fwd is in the OFF state in time resources other than the forwarding resource — S172

# FIG. 18

EP 4 510 747 A1

100

**First Device**

108    208

200

**Second Device**

102 — | Processor(s) | | Transceiver(s) |

104    106

| Transceiver(s) | | Processor(s) | — 202

| Memory(s) |

| Memory(s) |

206    204

# FIG. 19

EP 4 510 747 A1

codewords

layers

antenna ports

| 301 | 302 | 303 | 304 | 305 | 306 |

Scrambler → Modulator → Layer Mapper → Antenna Port Mapper → Resource Block Mapper → Signal Generator

Scrambler → Modulator → Layer Mapper → Antenna Port Mapper → Resource Block Mapper → Signal Generator

301  302  305  306

# FIG. 20

# FIG. 21

# FIG. 22

108, 208

Processor(s)
(102, 202)

Memory(s)
(104, 204)

Transceiver(s)
(106, 206)

# FIG. 23

Device (100,200)

| | |
|---|---|
| **Communication unit (110)**<br>(e.g., 5G communication unit) | **Control unit (120)**<br>(e.g., processor(s)) |
| **Communication circuit (112)**<br>(e.g., processor(s), memory(s)) | **Memory unit (130)**<br>(e.g., RAM, storage) |
| **Transceiver(s) (114)**<br>(e.g., RF unit(s), antenna(s)) | **Additional components (140)**<br>(e.g., power unit/battery, I/O unit,<br>driving unit, computing unit) |

# FIG. 24

1

100e — Home Appliance

100f — IoT device

100d — Hand-held device

400 — AI Server/device

300 — Network (5G)

200

200a

100a — Robot

100c — XR device

100b-1 — Vehicle

100b-2 — Vehicle

150a, 150b, 150c

EP 4 510 747 A1

## INTERNATIONAL SEARCH REPORT

| International application No. |
| --- |
| **PCT/KR2023/004896** |

**A.    CLASSIFICATION OF SUBJECT MATTER**

**H04W 72/27**(2023.01)i; **H04W 72/23**(2023.01)i; **H04W 72/04**(2009.01)i; **H04L 27/26**(2006.01)i; **H04W 84/04**(2009.01)i; **H04B 7/155**(2006.01)i; **H04W 72/20**(2023.01)i

According to International Patent Classification (IPC) or to both national classification and IPC

**B.    FIELDS SEARCHED**

Minimum documentation searched (classification system followed by classification symbols)

H04W 72/27(2023.01); H04B 7/155(2006.01); H04B 7/204(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: NCR(network-controlled repeater), MT(mobile termination), FWD(forwarding), BS(base station), UE, access link, beam, index, resource, slot, symbol, side control information, priority, aperiodic, semi-persistent, periodic

**C.    DOCUMENTS CONSIDERED TO BE RELEVANT**

| Category* | Citation of document, with indication, where appropriate, of the relevant passages | Relevant to claim No. |
| --- | --- | --- |
| Y<br><br>A | CMCC. Discussion on smart repeater. RP-213044, 3GPP TSG RAN Meeting #94-e, Electronic Meeting. 29 November 2021.<br>See sections 1-2.1. | 1-3,5-8,11-14, 16-19,22-26<br><br>4,9-10,15,20-21 |
| Y | ZTE CORPORATION. Discussion on TDD repeater switching requirements. R4-2205107, 3GPP TSG-RAN WG4 Meeting # 102-e, E-meeting. 14 February 2022.<br>See section 2.1. | 1-3,5-8,11-14, 16-19,22-26 |
| A | HUAWEI et al. Views on smart repeaters. RP-212505, 3GPP TSG RAN Meeting #93-e, Electronic Meeting. 10 September 2021.<br>See section 2. | 1-26 |
| A | 3GPP TS 38.106 V17.0.0. 3GPP; TSG RAN; NR; NR Repeater Radio Transmission and Reception (Release 17). 01 April 2022.<br>See section 6. | 1-26 |

☑ Further documents are listed in the continuation of Box C.          ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **03 July 2023** | **03 July 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/004896**

| C. | DOCUMENTS CONSIDERED TO BE RELEVANT | | |
|---|---|---|---|
| Category* | Citation of document, with indication, where appropriate, of the relevant passages | | Relevant to claim No. |
| A | US 2020-0403689 A1 (MOVANDI CORPORATION) 24 December 2020 (2020-12-24)<br>See paragraphs [0138]-[0165]; and figures 7A-7C. | | 1-26 |

Form PCT/ISA/210 (second sheet) (July 2022)

**INTERNATIONAL SEARCH REPORT**
Information on patent family members

International application No.

**PCT/KR2023/004896**

| Patent document cited in search report | | | Publication date (day/month/year) | Patent family member(s) | | | Publication date (day/month/year) |
|---|---|---|---|---|---|---|---|
| US | 2020-0403689 | A1 | 24 December 2020 | US | 10484078 | B2 | 19 November 2019 |
| | | | | US | 10560179 | B2 | 11 February 2020 |
| | | | | US | 10630373 | B2 | 21 April 2020 |
| | | | | US | 10819415 | B2 | 27 October 2020 |
| | | | | US | 11018752 | B2 | 25 May 2021 |
| | | | | US | 11082123 | B2 | 03 August 2021 |
| | | | | US | 11088756 | B2 | 10 August 2021 |
| | | | | US | 2019-0020401 | A1 | 17 January 2019 |
| | | | | US | 2019-0020402 | A1 | 17 January 2019 |
| | | | | US | 2019-0020407 | A1 | 17 January 2019 |
| | | | | US | 2019-0356381 | A1 | 21 November 2019 |
| | | | | US | 2020-0067593 | A1 | 27 February 2020 |
| | | | | US | 2020-0091992 | A1 | 19 March 2020 |
| | | | | US | 2020-0343963 | A1 | 29 October 2020 |
| | | | | US | 2021-0167843 | A1 | 03 June 2021 |
| | | | | US | 2021-0211183 | A1 | 08 July 2021 |
| | | | | US | 2021-0288713 | A1 | 16 September 2021 |
| | | | | WO | 2020-013878 | A1 | 16 January 2020 |

Form PCT/ISA/210 (patent family annex) (July 2022)